(19) Europäisches Patentamt

European Patent Office

Office européen des brevets

(11) **EP 3 555 776 B1**

(12) **FASCICULE DE BREVET EUROPEEN**

(45) Date de publication et mention de la délivrance du brevet:
**03.07.2024 Bulletin 2024/27**

(21) Numéro de dépôt: **17832254.1**

(22) Date de dépôt: **13.12.2017**

(51) Classification Internationale des Brevets (IPC):
*G06F 30/00* (2020.01)     *G06F 111/04* (2020.01)
*G06F 111/20* (2020.01)

(52) Classification Coopérative des Brevets (CPC):
**G06F 30/00;** G06F 2111/04; G06F 2111/20

(86) Numéro de dépôt international:
**PCT/FR2017/053552**

(87) Numéro de publication internationale:
**WO 2018/109385 (21.06.2018 Gazette 2018/25)**

(54) **PROCÉDÉ, SYSTÈME ET PROGRAMME D'ORDINATEUR D'AIDE A LA DECISION POUR LE CHOIX DE PIÈCES À ASSEMBLER**

VERFAHREN, SYSTEM UND COMPUTERPROGRAMM ZUR AUSWAHL VON BAUELEMENTEN

METHOD, SYSTEM AND COMPUTER PROGRAM FOR THE SELECTION OF ASSEMBLY PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2016 US 201662434087 P**

(43) Date de publication de la demande:
**23.10.2019 Bulletin 2019/43**

(73) Titulaire: **Safran Aircraft Engines**
**75015 Paris (FR)**

(72) Inventeurs:
• **BISOT, Clémence, Virginie, Charlotte**
**77550 Moissy-Cramayel (FR)**
• **MARBOEUF, Alice, Mathilde**
**77550 Moissy-Cramayel (FR)**
• **SAMSON, Benjamin**
**77550 Moissy-Cramayel (FR)**

(74) Mandataire: **Brevalex**
**Tour Trinity**
**1 B Place de la Défense**
**92400 Courbevoie (FR)**

(56) Documents cités:
**US-A- 3 538 590**

• **MATTHIAS H.Y. TAN ET AL: "Generalized selective assembly", IIE TRANSACTIONS, vol. 44, no. 1, 24 mai 2011 (2011-05-24), pages 27-42, XP055453417, US ISSN: 0740-817X, DOI: 10.1080/0740817X.2010.551649**
• **MOHAMMAD NAHANGI ET AL: "Optimum Assembly Planning for Modular Construction Using BIM and 3D Point Clouds",", 2016 MODULAR AND OFFSITE CONSTRUCTION (MOC) SUMMIT, 1 octobre 2016 (2016-10-01), pages 1-7, XP055454340, Edmonton, Alberta, Canada**

**Description**

**DOMAINE TECHNIQUE**

Le domaine de l'invention est celui de la production de pièces mécaniques. L'invention concerne plus particulièrement une étape d'assemblage de pièces entre elles pouvant nécessiter une opération préalable d'usinage, par exemple un ponçage, pour rattraper d'éventuels défauts de production rendant l'assemblage difficile voire impossible. Elle trouve notamment application à l'assemblage de pièces aéronautiques, par exemple l'assemblage d'une aube et de son renfort de bord d'attaque.

**ÉTAT DE LA TECHNIQUE ANTÉRIEURE**

L'assemblage d'une aube en matériau composite avec son renfort de bord d'attaque en titane est une étape chronophage. En effet, en fonction des formes respectives de l'aube et de son renfort de bord d'attaque, il peut être plus ou moins difficile de les assembler. Parfois, cet assemblage n'est possible qu'après un ponçage manuel de l'aube. Or un tel ponçage est une étape longue que l'on souhaite éviter le plus possible car elle est susceptible de venir dégrader les performances mécaniques de la pièce finale. Et parfois, le ponçage n'est même pas suffisant pour rattraper intégralement les anomalies de production et rendre possible l'assemblage. Le document "MATTHIAS H.Y. TAN ET AL: "Generalized sélective assembly",IIE TRANSACTIONS, vol. 44, no. 1, 24 mai 2011 (2011-05-24), pages 27-42" est un document pertinent dans le domaine d'assemblage et de ponçage de pièces mécaniques .

**EXPOSÉ DE L'INVENTION**

L'invention est définie dans les revendications indépendantes 1, 12 et 13.

Un objectif de l'invention est d'obtenir un assemblage de bonne qualité en minimisant le risque de devoir réaliser une opération d'usinage pour permettre d'assembler entre elles deux pièces mécaniques, comme par exemple une opération de ponçage en vue de permettre l'assemblage d'une aube et d'un renfort de bord d'attaque.

Elle propose pour ce faire un procédé d'assemblage de pièces choisies parmi une pluralité de premières pièces et une pluralité de deuxièmes pièces. Le procédé comprend les étapes suivantes.

Pour chaque première pièce et chaque deuxième pièce parmi la pluralité de premières pièces et la pluralité de deuxièmes pièces, une étape d'estimation d'un indicateur de défectuosité de l'assemblage de la première pièce avec la deuxième pièce.

Pour un lot de N assemblages à réaliser, une étape d'affectation de N premières pièces parmi la pluralité de premières pièces à N deuxièmes pièces parmi la pluralité de deuxième pièces pour constituer N paires d'une première pièce et d'une seconde pièce. Ladite affectation est réalisée de manière à ce que lesdites N paires minimisent une défectuosité totale correspondant à la somme des indicateurs de défectuosité de l'assemblage de chacune des N paires.

Certains aspects préférés mais non limitatifs de ce procédé sont les suivants :

- il comprend une réduction de l'indicateur de défectuosité de l'assemblage d'une première pièce avec une deuxième pièce lorsque la première pièce est mise à disposition pour un assemblage depuis une durée supérieure à un premier seuil ;
- il comprend une réduction de l'indicateur de défectuosité de l'assemblage d'une première pièce avec une deuxième pièce lorsque la deuxième pièce est mise à disposition pour un assemblage depuis une durée supérieure à un deuxième seuil.
- il comprend une réduction de l'indicateur de défectuosité de l'assemblage d'une première pièce et d'une deuxième pièce mises à disposition pour un assemblage lorsqu'aucune deuxième pièce, qui deviendra disponible pour un assemblage avec la première pièce au cours de la mise à disposition de la première pièce pour un assemblage, ne pourra être assemblée avec la première pièce ;
- il comprend en outre une réduction de l'indicateur de défectuosité de l'assemblage d'une première pièce et d'une deuxième pièce mises à disposition pour un assemblage, ladite réduction étant pondérée par un facteur représentatif d'une probabilité qu'aucune première pièce, qui deviendra disponible pour un assemblage au cours de la mise à disposition de la deuxième pièce pour un assemblage, ne puisse être assemblée avec la deuxième pièce ;
- il comprend la formation d'un sous-ensemble de ladite pluralité de premières pièces constitué des premières pièces les plus anciennement mises à disposition pour un assemblage, les N premières pièces affectées au N deuxièmes pièces appartenant audit sous-ensemble de ladite pluralité de premières pièces ;
- il comprend la formation d'un sous-ensemble de ladite pluralité de deuxièmes pièces constitué des deuxièmes pièces les plus anciennement mises à disposition pour un assemblage, les N deuxièmes pièces affectées au N premières pièces appartenant audit sous-ensemble de ladite pluralité de deuxièmes pièces ;

- l'indicateur de défectuosité de l'assemblage d'une première pièce avec une deuxième pièce est estimé à partir de caractéristiques géométriques de la première et de la deuxième pièce ;
- l'estimation de l'indicateur de défectuosité de l'assemblage la première pièce avec la deuxième pièce comprend une tentative d'alignement de nuages de points représentant les surfaces de la première et de la deuxième pièce.

L'invention porte également sur un système et un produit programme d'ordinateur aptes à mettre en oeuvre ce procédé.

## BRÈVE DESCRIPTION DES DESSINS

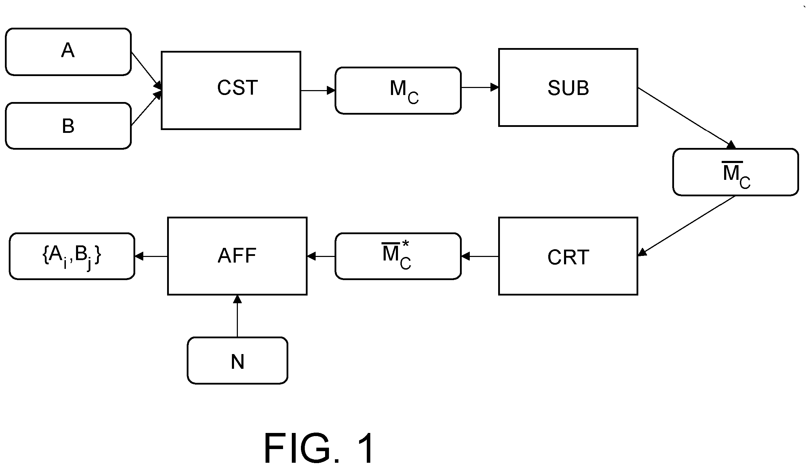

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels la figure 1 illustre les différentes étapes d'un mode de réalisation possible du procédé selon l'invention.

## EXPOSÉ DÉTAILLÉ DE MODES DE RÉALISATION PARTICULIERS

L'invention porte sur un procédé d'assemblage de pièces choisies parmi une pluralité de premières pièces et une pluralité de deuxièmes pièces. Un exemple de réalisation qui sera décrit en détail par la suite concerne l'assemblage d'une aube (première pièce) et d'un renfort de bord d'attaque (deuxième pièce).

Ce procédé d'assemblage comprend une première étape consistant à choisir deux pièces à assembler au moyen d'une logique pertinente. Au cours d'une seconde étape ces deux pièces sont assemblées sans colle pour vérifier leur bonne adéquation géométrique. Dans une troisième étape, si nécessaire, un ponçage est réalisé pour enlever un surplus matière identifié sur l'une des pièces. Dans une quatrième étape, il est vérifié si le ponçage réalisé est suffisant. Si la vérification est concluante, dans une cinquième étape, le collage des deux éléments est réalisé. La première étape est donc déterminante sur les étapes qui suivent et conditionne la durée de l'opération et la qualité de l'assemblage final.

Le procédé selon l'invention permet d'optimiser le choix des pièces à assembler en venant spécifier les pièces à assembler qui vont permettre de maximiser la qualité de l'assemblage.

Dans le domaine de l'optimisation, on parle généralement de minimisation d'une fonction-coût, cette minimisation pouvant inclure dans le cadre de l'invention les objectifs techniques suivants :

- minimiser le nombre de pièces poncées et la masse de matière poncée (quand il y a ponçage) ;
- minimiser la dispersion de la pièce assemblée et disposer d'une pièce assemblée au plus proche des spécifications de la pièce nominale,
- minimiser le taux de rebut ;
- maintenir la cadence de production (pas de rupture de production) ;
- maintenir un ordre de production des aubes afin de faciliter le suivi de production.

On considère un poste d'assemblage où à différents instants un lot de N assemblages doit être réalisé en utilisant les pièces mises à disposition pour un assemblage. A titre d'exemple illustratif, on peut chercher à réaliser chaque jour un lot de 8 assemblages à partir de 16 aubes et de 40 renforts de bord d'attaque mis à disposition.

La première pluralité de pièces et la deuxième pluralité de pièces ne sont pas limitées aux pièces mises à disposition pour un assemblage, mais peuvent inclure des pièces déjà présentes dans l'usine mais non encore intégrées au poste d'assemblage, par exemple parce qu'elles sont soumises à des opérations d'inspection. A titre d'exemple, 80 renforts de bord d'attaque sont livrés à l'usine chaque semaine, mais n'intègrent le poste d'assemblage que par lot de 8 pour remplacer les renforts mis à disposition du poste d'assemblage qui ont été utilisés pour réaliser chaque jour le lot de 8 assemblages.

En référence à la figure 1, pour chaque première pièce A et chaque deuxième pièce B parmi la première pluralité de premières pièces et la pluralité de deuxièmes pièces, le procédé comprend une étape CST d'estimation d'un indicateur de défectuosité de l'assemblage de la première pièce avec la deuxième pièce. On forme ainsi une matrice d'indicateurs Mc qui indique, pour chaque première pièce et chaque deuxième pièce, une prédiction de la défectuosité de l'assemblage de cette première pièce et de cette deuxième pièce. Reprenant la terminologie de l'optimisation, cet indicateur peut être assimilé à une fonction-coût (ici un coût d'assemblage) que l'on va chercher à minimiser.

Dans un exemple de réalisation, l'indicateur de défectuosité d'une paire formée par une première pièce et une deuxième pièce peut être constitué de deux éléments :

- un premier élément lié à la quantité de matière devant être poncée pour permettre de réaliser l'assemblage ;
- un deuxième élément lié à l'écart entre la position relative des pièces assemblées et une position relative nominale.

En cherchant à minimiser un tel indicateur de défectuosité (assimilable à un coût d'assemblage), on cherche ainsi à minimiser la quantité de matière poncée et à constituer des paires les plus proches possibles du nominal. Cet indicateur de défectuosité de l'assemblage d'une première pièce j et d'une deuxième pièce i peut s'exprimer selon $C_{ij}$ = $G_{ij}$ + $\|P_{ij} - P_0\|$, où $G_{ij}$ représente la quantité de matière poncée et $\|P_{ij} - P_0\|$ représente une position relative des pièces par rapport à une position nominale.

L'indicateur de défectuosité de l'assemblage d'une première pièce et d'une deuxième pièce peut être estimé à partir de caractéristiques géométriques desdites pièces mesurées par exemple à l'aide de palpeurs.

Dans un mode de réalisation, on exploite des caractéristiques géométriques simples des pièces et un modèle de prédiction capable d'apprentissage permettant de prédire une probabilité que l'assemblage soit réalisable sans ponçage. Plus la probabilité est grande, moins l'indicateur de défectuosité de l'assemblage des pièces est important. Ce modèle est issu d'un apprentissage réalisé à partir d'un retour d'expérience acquis sur un certain nombre de paires dont on a déjà tenté de réaliser l'assemblage.

A titre d'exemple concernant l'assemblage d'une aube et d'un renfort de bord d'attaque, on peut, à l'aide des caractéristiques géométriques mesurées, calculer une distance cible $g_o$ entre le sommet de l'aube et le renfort de bord d'attaque à partir d'une formule simple : distance cible = distance nominale + caractéristiques géométriques mesurées.

En parallèle, les caractéristiques géométriques mesurées sont aussi utilisées pour prédire une distance $g_p$ entre le sommet de l'aube et le renfort de bord d'attaque à l'aide d'un modèle prédictif dont l'apprentissage a été réalisé à l'aide de paires dont on a déjà tenté de réaliser l'assemblage.

La distance $g_p$ peut notamment s'exprimer comme une fonction linéaire de certaines caractéristiques géométriques de l'aube et du bord d'attaque. Les paramètres de la fonction linéaire sont appris à l'aide d'une régression linéaire à partir de données obtenues sur des paires dont on a déjà tenté de réaliser l'assemblage.

La distance cible $g_o$ et la distance prédite $g_p$ sont ensuite comparées. Plus elles sont proches, plus on a de la chance que la paire puisse être assemblée sans ponçage. En revanche, si la différence entre ces distances excède un seuil $g_{lim}$, on considère que la paire ne peut pas être assemblée.

Connaissant $g_o$-$g_p$, on calcule la probabilité p que la paire puisse être assemblée sans ponçage. Cette probabilité p est en effet une fonction de $g_o$-$g_p$ et cette fonction peut avoir été apprise à l'aide de paires dont on a déjà tenté de réaliser l'assemblage.

Lorsque la paire peut être assemblée ($|g_0 - g_p| \leq g_{lim}$), son indicateur de défectuosité peut s'exprimer comme $|g_p - g_{nominal}|$ + $(1 - p) * Coût_{ponçage}$, où $g_{nominal}$ correspond à la distance nominale, p est la probabilité que la paire puisse être assemblée sans ponçage et $Coût_{ponçage}$ correspond au coût de ponçage (i.e. la quantité de matière poncée) lorsque $|g_0 - g_p| = g_{lim}$.

Dans un autre mode de réalisation, on exploite des nuages de points représentatifs des surfaces 3D de la première et de la deuxième pièce. Une tentative d'alignement de ces nuages de points permet de prédire les zones qui sont à poncer (dans le cas où un ponçage doit être réalisé) et donc la quantité de matière à enlever. Cet alignement peut être réalisé selon les techniques exposées dans la thèse de Simon Flöry intitulée « Constrained Matching of Point Clouds and Surfaces », 2009. Dans ce mode de réalisation, le coût du ponçage est estimé de manière plus précise puisqu'on peut estimer la quantité de matière qui va devoir être poncée.

La matrice des indicateurs de défectuosité est calculée en continu, c'est-à-dire qu'elle est mise à jour à chaque fois que la géométrie d'une nouvelle pièce est connue. Elle est aussi mise à jour à chaque fois qu'une pièce devient indisponible (par exemple parce que la pièce a été assemblée ou mise au rebut) : on supprime alors de la matrice la ligne ou la colonne correspondant à la pièce devenue indisponible.

Il est de plus possible de prendre en compte le fait que la géométrie de certaines pièces est connue parfois longtemps avant que celles-ci ne deviennent disponibles pour être assemblées. A titre d'exemple, les renforts de bord d'attaque sont produits dans une usine différente de l'usine où se trouve le poste d'assemblage avec les aubes. La géométrie des renforts de bord d'attaque peut être mesurée dans l'usine de production d'origine et être donc connue avant que ces renforts ne soient livrés dans l'usine où se fait l'assemblage. Il est de la sorte possible d'avoir une bonne vision des renforts « à venir » et donc, comme cela sera décrit plus en détail par la suite, de mieux anticiper les conséquences des choix de paires faits à un instant *t* sur les choix qui devront être faits plus tard.

En référence à la figure 1, un fois la matrice des indicateurs de défectuosité déterminée, le procédé selon l'invention comprend, pour un lot de N assemblages à réaliser (N étant un entier naturel supérieur ou égal à deux), la mise en oeuvre d'une étape d'affectation AFF de N premières pièces Ai parmi la pluralité de premières pièces à N deuxièmes pièces Bj parmi la pluralité de deuxième pièces pour constituer N paires {Ai, Bj} d'une première pièce et d'une seconde pièce. L'affectation est réalisée de manière à ce que lesdites N paires minimisent une défectuosité totale correspondant à la somme des indicateurs de défectuosité estimés pour l'assemblage de chacune des N paires. Cette affectation est de préférence réalisée de manière à minimiser la défectuosité sur le long terme, en réalisant une optimisation prenant en considération une anticipation du futur.

Cette étape d'affectation peut être réalisée chaque fois que nécessaire quand un opérateur veut savoir quelles paires doivent être assemblées. Typiquement, cette étape est mise en oeuvre chaque jour pour identifier les N paires qui doivent être faites durant la journée.

Cette étape d'affectation met en oeuvre la résolution d'un problème d'affectation linéaire, pour venir déterminer les N paires satisfaisant l'objectif quantitatif de minimisation de la défectuosité totale tout en respectant la cadence de production (i.e. réaliser les N assemblages, par exemple réaliser 8 assemblages par jour) pour ne pas retarder la production.

Un problème d'affectation linéaire est un problème dans lequel des ressources doivent être attribuées à des tâches. Un coût est associé à chaque paire ressource-tâche, et les paires doivent être choisies de manière à minimiser le coût total de l'affectation. Ce problème peut s'écrire selon $\underset{x_{i,j}}{\operatorname{argmin}} \sum_{i=1}^{NB} \sum_{j=1}^{NA} x_{i,j} \cdot c_{i,j}$ ,

avec $c_{i,j}$ le coût d'affectation de la ressource $i$ à la tâche $j$, et $x_{i,j}$ des variables de décision avec $x_{i,j}$ = 1 si la ressource $i$ est affectée à la tâche $j$, 0 sinon ;
et sous les contraintes selon lesquelles :

- chaque ressource n'est affectée qu'au plus une fois: $\forall\ i,\ \Sigma_j x_{i,j} \leq 1$ ;
- chaque tâche n'est affectée qu'au plus une fois: $\forall\ j,\ \Sigma_i x_{i,j} \leq 1$ ;
- $N$ affectations doivent être réalisées : $\Sigma_i \Sigma_j x_{i,j} = N$.

Ce problème d'affectation peut être résolu par l'algorithme hongrois ou selon des techniques d'optimisation linéaire (algorithme du simplexe ou algorithme de points intérieurs par exemple).

Le problème d'affectation peut prend en compte la contrainte de respect de la cadence de production sous la forme d'un coût noté R correspondant au fait de ne pas être capable de réaliser l'un des N assemblages requis (il n'y a pas assez de pièces "assemblables"). Ainsi si une première pièce et une deuxième pièce ne peuvent être assemblées, leur indicateur de défectuosité est R. On peut considérer qu'un indicateur prohibitif rend les pièces non assemblables, et tout indicateur estimé supérieur à un seuil est fixé à R.

Le problème d'affectation peut prendre en compte d'autres contraintes, comme par exemple le fait de donner la priorité aux pièces les plus anciennement mises à disposition pour un assemblage. Du fait d'un traitement de surface appliqué aux renforts de bord d'attaque pour améliorer la qualité du collage, ces renforts ne peuvent pas rester trop longtemps au poste d'assemblage. S'ils y restent plus de $\Delta t_{lim}^B$ jours, 50 jours par exemple, ils doivent être mis au rebus et ne sont donc plus mis à disposition pour un assemblage. Le coût d'un telle mise au rebut est noté $S^B$. D'autres part, afin d'aider au suivi de production, il est préférable que l'ordre de production des aubes soient maintenues le plus possible à l'assemblage. Ainsi, on associe un coût à une mise à disposition trop longue d'une aube pour un assemblage (i.e. un assemblage trop tardif), supérieure à $\Delta t_{lim}^A$ , par exemple supérieure à 5 jours, que l'on note $D^A$.

L'ensemble de ces coûts peut être résumé dans une fonction objectif que l'on souhaite optimiser. Entre $t = 0$ and $t = T$:

$$\sum_{t=0}^{T} \sum_{p=1}^{N(t)} C(B(t)_p, A(t)_p) + Nb_{B-rebut} \times S^B + Nb_{A-retard} \times D^A$$

où :

- N($t$) est le nombre d'assemblages dans le lot devant être réalisé à l'instant $t$.
- $B(t)_p, A(t)_p$ est l'une des paires constituées à l'instant t par la résolution du problème d'affectation et $C(B(t)_p, Ae(t)_p)$ est l'indicateur de défectuosité estimé de l'assemblage de cette paire :

$$C\big(B(t)_p, A(t)_p\big) = \begin{cases} R & si\ l'assemblage\ n'est\ pas\ faisable \\ G_{ij} + \|P_{ij} - P_0\| & sinon \end{cases}$$

- Les pièces d'une paire constituée à l'instant t sont choisies parmi les pièces mises à la disposition pour un assemblage (i.e. présentes dans le poste d'assemblage) ;
- $Nb_{B-rebut}$ est le nombre de renforts mis au rebut entre 0 and $T$;

- $Nb_{A\text{-}retard}$ est le nombre d'aubes qui ont été retardées au niveau du poste d'assemblage (y restant plus de 5 jours par exemple) entre 0 et *T.*

Une fois les N paires constituées à l'issue de l'étape d'affectation, l'opérateur réalise l'assemblage de ces paires. La défectuosité réelle de l'assemblage de ces N paires est enregistrée. Notamment la quantité de matière poncée et la déviation par rapport au nominal sont enregistrées.

Cette information sur les défectuosités réelles d'assemblage (ou coûts réels d'appairage) peut être utilisée de manière continue et automatique dans le cas où l'opérateur se rend compte que l'assemblage d'une paire constituée n'est en fait pas réalisable. Dans ce cas, les pièces restent au poste d'assemblage, et il faut garder en mémoire le fait qu'en réalité leur assemblage n'est pas faisable pour éviter que celui-ci ne soit proposé à nouveau. Pour cela, l'indicateur de défectuosité estimé pour cette paire est corrigé pour lui associer le coût R.

Cette information sur les coûts réels d'appairage peut également être utilisée de manière discontinue et non automatique pour recalibrer le modèle de prédiction des indicateurs de défectuosité. Les indicateurs estimés prédits par ce modèle sont comparés aux coûts réels et cette comparaison permet de détecter une éventuelle déviation du modèle de prédiction et de le re-calibrer si besoin en réalisant à nouveau son apprentissage à l'aide des nouvelles données récoltées.

En référence toujours à la figure 1, dans une variante de réalisation, afin de donner la priorité à l'assemblage de certaines pièces, l'étape d'affectation AFF est précédée de l'une et/ou l'autre d'une étape de sélection SUB d'un sous-ensemble de pièces et d'une étape de correction CRT des indicateurs de défectuosité estimés.

L'étape de correction CRT des indicateurs de défectuosité estimés vient réduire un indicateur de défectuosité estimé d'une première pièce et d'une deuxième pièce afin de favoriser la sélection de cet assemblage lors de l'étape d'affectation. Elle fournit une matrice d'indicateurs corrigés $\overline{M_c}^*$.

Cette réduction vise par exemple à favoriser l'assemblage des pièces les plus anciennement mises à disposition pour un assemblage.

On peut ainsi procéder à une réduction de l'indicateur de défectuosité estimé d'une première pièce avec une deuxième pièce lorsque la première pièce est mise à disposition pour un assemblage depuis une durée supérieure à un premier seuil. On peut ainsi anticiper un temps de présence excessif d'une aube au poste d'assemblage, par exemple supérieur à 3 jours. L'indicateur corrigé s'écrit pour cette aube j, pour tout renfort i dont l'assemblage avec l'aube j peut être réalisé, $\widetilde{C_{ij}} = C_{ij} - D^A$. En d'autres termes, si cette aube ne fait pas l'objet d'un assemblage à l'instant t, alors il en coûtera $D^A$ car cette aube sera considérée comme faisant l'objet d'un retard au cours des prochains jours.

Alternativement, et/ou en complément, on procède à une réduction de l'indicateur de défectuosité estimé pour l'assemblage d'une première pièce avec une deuxième pièce lorsque la deuxième pièce est mise à disposition pour un assemblage depuis une durée supérieure à un deuxième seuil. On peut anticiper une mise au rebut d'un renfort de bord d'attaque lorsque celui-ci est mis à disposition pour un assemblage depuis plus de 43 jours par exemple. L'indicateur corrigé s'écrit pour ce renfort i, pour toute aube j pouvant être assemblée avec le renfort i, $\widetilde{C_{ij}} = C_{ij} - S^B$. En d'autres termes, si ce renfort ne fait pas l'objet d'un assemblage à l'instant t, alors il en coûtera $S^B$ car ce renfort sera mis au rebut au cours des prochains jours.

Selon d'autres stratégies de réduction de l'indicateur de défectuosité estimé, on tire parti de la connaissance que l'on a des pièces à venir au poste d'assemblage pour favoriser l'assemblage de pièces qui sont difficiles à assembler par rapport à des pièces faciles à assembler.

Par exemple, on procède à une réduction de l'indicateur de défectuosité estimé pour l'assemblage d'une première pièce avec une deuxième pièce, ladite réduction étant pondérée par un facteur représentatif d'une probabilité qu'aucune première pièce, qui deviendra disponible pour un assemblage au cours de la mise à disposition de la deuxième pièce pour un assemblage, ne puisse être assemblée avec la deuxième pièce (i.e. l'indicateur de défectuosité estimé pour l'assemblage de la deuxième pièce avec chacune des premières pièces à venir est égal à R). La réduction est ainsi d'autant plus importante qu'il y a un risque de ne trouver, dans les premières pièces à venir, aucune première pièce pouvant être assemblée avec la deuxième pièce.

Considérant un renfort de bord d'attaque i mis à disposition pour un assemblage depuis $age_i(t)$ à l'instant *t*, on dispose de $N_i^t$ aubes qui seront mises à disposition pour un assemblage avant que le renfort i ne soit mis au rebut. Il s'agit des aubes qui intégreront le poste d'assemblage pendant les prochains $\Delta t_{lim}^B - age_i(t)$ jours. On note $p_i$ la probabilité que ce renfort i puisse être assemblé avec une aube (cette probabilité peut être estimée sur la base de la capacité de ce renfort i à être assemblé avec les aubes qui ont précédemment été mises à disposition pour un assemblage).

La probabilité qu'aucune aube, qui deviendra disponible pour un assemblage au cours de la mise à disposition du renfort i pour un assemblage, ne puisse être assemblée avec le renfort i est $P_i^t = (1 - p_i)^{N_i^t}$. L'indicateur de défectuosité estimé pour l'assemble de ce renfort i, pour toute aube j pouvant être assemblée avec le renfort i, est alors corrigé selon $\widetilde{C_{ij}} = C_{ij} - S^B \times P_i^t$. Cette réduction peut s'accompagner de la réduction favorisant les aubes les plus anciennes telle que décrite précédemment.

Selon un autre exemple de stratégie de réduction de l'indicateur de défectuosité estimé tirant parti de la connaissance que l'on a des pièces à venir au poste d'assemblage, l'indicateur de défectuosité estimé pour l'assemblage d'une première pièce avec une deuxième pièce est réduit lorsqu'aucune deuxième pièce, qui deviendra disponible pour un assemblage avec la première pièce au cours de la mise à disposition de la première pièce pour un assemblage, ne pourra être assemblée avec la première pièce (i.e. l'indicateur de défectuosité estimé de la première pièce avec chacune des deuxièmes pièces à venir est égal à R). Cet autre exemple peut être mis en oeuvre conjointement avec l'exemple précédent intégrant la probabilité $P_i^t$.

Considérant une aube j mise à disposition pour un assemblage depuis $age_j(t)$ à l'instant $t$, on dispose d'un ensemble nommé $\mathcal{L}_j^t$ de renforts qui deviendront disponibles pour un assemblage avec l'aube j avant que l'aube j ne soit considérée comme trop ancienne (i.e. dans les prochains $\Delta t_{lim}^A - age_j(t)$ jours). Si dans l'ensemble $\mathcal{L}_j^t$, aucun renfort ne peut être assemblé avec l'aube j, alors on vient corriger l'indicateur de défectuosité pour tout renfort i pouvant être assemblé avec l'aube j selon $\widetilde{C_{ij}} = C_{ij} - D^A$. Dans le cas contraire, on ne réalise pas de correction.

La description qui suit porte sur l'étape de sélection SUB d'un sous-ensemble de pièces pour former une sous-matrice d'indicateurs $\overline{M_c}$. Cette sélection peut notamment consister à former un sous-ensemble de ladite pluralité de premières pièces constitué des premières pièces les plus anciennement mises à disposition pour un assemblage. Au cours de l'étape d'affectation AFF, les N premières pièces affectées au N deuxièmes pièces appartiennent audit sous-ensemble de ladite pluralité de premières pièces.

Par exemple, à chaque fois que l'on veut réaliser un lot de N assemblages, on sélectionne le plus petit sous-ensemble d'aubes qui permet de réaliser les N assemblages avec l'ensemble des renforts. Cette sélection est réalisée en intégrant les aubes au sous-ensemble en fonction de leur ancienneté dans le poste d'assemblage. Le sous-ensemble résultant est noté $\mathcal{B}(t)$.

Cette sélection nécessite de savoir le nombre maximal d'assemblages possibles partant d'un ensemble donné d'aubes et d'un ensemble donné de renforts. Cela est possible en représentant les ensembles d'aubes et de renforts dans un graphe biparti binaire reliant l'ensemble des aubes à l'ensemble des renforts avec une arête i,j si la paire i,j peut être assemblée. Un algorithme de couplage de cardinalité maximale dans un graphe biparti, tel que l'algorithme de Ford-Fulkerson par exemple, permet de déterminer le nombre d'assemblages possibles.

L'étape de sélection SUB d'un sous-ensemble de pièces peut également consister à former un sous-ensemble de ladite pluralité de deuxièmes pièces constitué des deuxièmes pièces les plus anciennement mises à disposition pour un assemblage. Au cours de l'étape d'affectation AFF, les N deuxièmes pièces affectées au N premières pièces appartiennent alors audit sous-ensemble de ladite pluralité de deuxièmes pièces.

Par exemple une fois le sous-ensemble d'aubes $\mathcal{B}(t)$ sélectionné, on sélectionne le plus petit sous-ensemble, noté $\mathcal{L}(t)$, de renforts qui permet de réaliser les N assemblages avec les aubes du sous-ensemble $\mathcal{B}(t)$. Cette sélection est réalisée en intégrant les renforts au sous-ensemble $\mathcal{L}(t)$ en fonction de leur ancienneté dans le poste d'assemblage.

En variante, la formation d'un sous-ensemble $\mathcal{L}(t)$ de ladite pluralité de deuxièmes pièces est réalisée de manière à ce que les deuxièmes pièces dudit sous-ensemble $\mathcal{L}(t)$ permettent, avec les premières pièces dudit sous-ensemble $\mathcal{B}(t)$ de premières pièces, de réaliser M assemblages sans usinage, où M correspond au nombre d'assemblages sans usinage pouvant être réalisés avec les deuxièmes pièces de ladite pluralité de deuxièmes pièces et les premières pièces dudit sous-ensemble $\mathcal{B}(t)$ de ladite pluralité de premières pièces. Au cours de l'étape d'affectation AFF, les N deuxièmes pièces affectées au N premières pièces appartiennent alors audit sous-ensemble $\mathcal{L}(t)$ de ladite pluralité de deuxièmes pièces.

Dans cette variante, une fois le sous-ensemble d'aubes $\mathcal{B}(t)$ sélectionné, on sélectionne le plus petit sous-ensemble $\mathcal{L}'(t)$ de renforts qui permet de réaliser les N assemblages avec les aubes du sous-ensemble $\mathcal{B}(t)$ et de réaliser M assemblages sans ponçage. M correspond au nombre d'assemblages sans ponçage qu'il est possible de réaliser avec les aubes du sous-ensemble $\mathcal{B}(t)$ et l'ensemble des renforts. De telle manière, l'affectation est faite avec les renforts les plus anciens sans dégrader le nombre d'assemblages pouvant être réalisés sans ponçage.

Dans une application pratique de l'algorithme, le nombre M n'est en réalité pas connu de manière exacte puisqu'on est simplement capable d'estimer une probabilité qu'une paire soit faisable sans ponçage ou non. Ainsi, on n'a pas un nombre M d'assemblage faisables sans ponçage mais une estimation $m$ de l'espérance du nombre d'assemblages faisables sans ponçage si on fait les paires avec les aubes du sous-ensemble $\mathcal{B}(t)$ et l'ensemble des renforts.

On choisit ainsi le sous-ensemble de renforts $\mathcal{L}'(t)$ qui permet de réaliser N assemblages avec les aubes du sous-ensemble $\mathcal{B}(t)$ et d'avoir une espérance $m'$ du nombre d'assemblage faisable sans ponçage (parmi les N paires choisies) qui est proche de l'espérance $m$ : on cherche à avoir $m - m' < \varepsilon$ où $\varepsilon$ est un seuil défini en fonction des applications.

L'invention n'est pas limitée au procédé tel que précédemment décrit, mais s'étend également à un système d'assemblage de pièces choisies parmi une pluralité de premières pièces et une pluralité de deuxièmes pièces, comprenant un calculateur configuré pour mettre en oeuvre ce procédé, et notamment :

- pour estimer, pour chaque première pièce et chaque deuxième pièce parmi la pluralité de premières pièces et la pluralité de deuxièmes pièces, un indicateur de défectuosité de l'assemblage de la première pièce avec la deuxième pièce ;
- pour affecter, lorsqu'un lot de N assemblages est à réaliser, N premières pièces parmi la pluralité de premières pièces à N deuxièmes pièces parmi la pluralité de deuxième pièces en venant constituer N paires d'une première pièce et d'une seconde pièce, ladite affectation étant réalisée de manière à ce que lesdites N paires minimisent une défectuosité totale d'assemblage correspondant à la somme des indicateurs de défectuosité estimés de l'assemblage de chacune des N paires.

L'invention s'étend également à un produit programme d'ordinateur comprenant des instructions de code de programme pour l'exécution des étapes d'estimation et d'affectation du procédé selon l'invention lorsque ledit programme est exécuté sur un ordinateur.

**Revendications**

1. Procédé d'assemblage de pièces choisies parmi une pluralité de premières pièces et une pluralité de deuxièmes pièces, comprenant les étapes suivantes mises en oeuvre par un calculateur:

    - pour chaque première pièce et chaque deuxième pièce parmi la pluralité de premières pièces et la pluralité de deuxièmes pièces, estimation (CST) d'une quantité de matière devant être poncée pour permettre de réaliser l'assemblage de la première pièce avec la deuxième pièce et estimation d'un écart entre la position relative des première et deuxième pièces assemblées et une position relative nominale, la somme de la quantité estimée et de l'écart estimé formant un indicateur de défectuosité de l'assemblage de la première pièce avec la deuxième pièce ;
    - pour un lot de N assemblages à réaliser, affectation (AFF) de N premières pièces parmi la pluralité de premières pièces à N deuxièmes pièces parmi la pluralité de deuxième pièces pour constituer N paires ({Ai, Bj}) d'une première pièce et d'une seconde pièce, ladite affectation étant réalisée de manière à ce que lesdites N paires minimisent une défectuosité totale correspondant à la somme des indicateurs de défectuosité de l'assemblage de chacune des N paires
    - et en ce qu'il comporte la réalisation de l'assemblage et le ponçage des N pairs qui minimisent la défectuosité totale.

2. Procédé selon la revendication 1, dans lequel les premières pièces sont des aubes et les deuxièmes pièces sont des renforts de bord d'attaque

3. Procédé selon l'une des revendications 1 et 2, comprenant une étape mise en oeuvre par le calculateur de réduction (CRT) de l'indicateur de défectuosité de l'assemblage d'une première pièce avec une deuxième pièce lorsque la première pièce est mise à disposition pour un assemblage depuis une durée supérieure à un premier seuil.

**4.** Procédé selon l'une des revendications 1 à 3, comprenant une étape mise en oeuvre par le calculateur de réduction (CRT) de l'indicateur de défectuosité de l'assemblage d'une première pièce avec une deuxième pièce lorsque la deuxième pièce est mise à disposition pour un assemblage depuis une durée supérieure à un deuxième seuil.

**5.** Procédé selon la revendication 1, comprenant une étape mise en oeuvre par le calculateur de réduction (CRT) de l'indicateur de défectuosité de l'assemblage d'une première pièce et d'une deuxième pièce mises à disposition pour un assemblage lorsqu'aucune deuxième pièce, qui deviendra disponible pour un assemblage avec la première pièce au cours de la mise à disposition de la première pièce pour un assemblage, ne pourra être assemblée avec la première pièce.

**6.** Procédé selon l'une des revendications 1, 3 ou 5, comprenant en outre une étape mise en oeuvre par le calculateur de réduction de l'indicateur de défectuosité de l'assemblage d'une première pièce et d'une deuxième pièce mises à disposition pour un assemblage, ladite réduction étant pondérée par un facteur représentatif d'une probabilité qu'aucune première pièce, qui deviendra disponible pour un assemblage au cours de la mise à disposition de la deuxième pièce pour un assemblage, ne puisse être assemblée avec la deuxième pièce.

**7.** Procédé selon l'une des revendications 1 à 6, comprenant une étape mise en oeuvre par le calculateur de formation (SUB) d'un sous-ensemble de ladite pluralité de premières pièces constitué des premières pièces les plus anciennement mises à disposition pour un assemblage et dans lequel les N premières pièces affectées au N deuxièmes pièces appartiennent audit sous-ensemble de ladite pluralité de premières pièces.

**8.** Procédé selon la revendication 7, comprenant une étape mise en oeuvre par le calculateur de formation (SUB) d'un sous-ensemble de ladite pluralité de deuxièmes pièces constitué des deuxièmes pièces les plus anciennement mises à disposition pour un assemblage, et dans lequel les N deuxièmes pièces affectées au N premières pièces appartiennent audit sous-ensemble de ladite pluralité de deuxièmes pièces.

**9.** Procédé selon la revendication 8, dans lequel la formation (SUB) d'un sous-ensemble de ladite pluralité de deuxièmes pièces est réalisée de manière à ce que les deuxièmes pièces dudit sous-ensemble de ladite pluralité de deuxièmes pièces permettent, avec les premières pièces dudit sous-ensemble de premières pièces, de réaliser M assemblages sans usinage, où M correspond au nombre d'assemblages sans usinage pouvant être réalisés avec les deuxièmes pièces de ladite pluralité de deuxièmes pièces et les premières pièces dudit sous-ensemble de ladite pluralité de premières pièces.

**10.** Procédé selon l'une des revendications 1 à 9, dans lequel l'indicateur de défectuosité de l'assemblage d'une première pièce avec une deuxième pièce est estimé à partir de caractéristiques géométriques de la première et de la deuxième pièce.

**11.** Procédé selon la revendication 10, dans lequel l'estimation de l'indicateur de défectuosité de l'assemblage de la première pièce avec la deuxième pièce comprend une tentative d'alignement de nuages de points représentant les surfaces de la première et de la deuxième pièce.

**12.** Système d'assemblage de pièces choisies parmi une pluralité de premières pièces et une pluralité de deuxièmes pièces, comprenant un calculateur configuré :

- pour estimer, pour chaque première pièce et chaque deuxième pièce parmi la pluralité de premières pièces et la pluralité de deuxièmes pièces, une quantité de matière devant être poncée pour permettre de réaliser l'assemblage de la première pièce avec la deuxième pièce et un écart entre la position relative des première et deuxième pièces assemblées et une position relative nominale, la somme de la quantité estimée et de l'écart estimé formant un indicateur de défectuosité de l'assemblage de la première pièce avec la deuxième pièce ; et
- pour affecter, lorsqu'un lot de N assemblages est à réaliser, N premières pièces parmi la pluralité de premières pièces à N deuxièmes pièces parmi la pluralité de deuxième pièces en venant constituer N paires d'une première pièce et d'une seconde pièce, ladite affectation étant réalisée de manière à ce que lesdites N paires minimisent une défectuosité totale correspondant à la somme des indicateurs de défectuosité de l'assemble chacune des N paires,
- et en ce qu'il comporte des moyens pour réaliser l'assemblage et le ponçage des N pairs qui minimisent la défectuosité totale.

**13.** Produit programme d'ordinateur comprenant des instructions de code de programme pour l'exécution des étapes d'estimation et d'affectation du procédé selon l'une quelconque des revendications 1 à 11 lorsque ledit programme est exécuté sur un ordinateur.

**Patentansprüche**

1. Montageverfahren für Teile, die aus einer Vielzahl von ersten Teilen und einer Vielzahl von zweiten Teilen ausgewählt werden, umfassend die folgenden Schritte, die durch einen Rechner implementiert werden:

    - für jedes erste Teil und jedes zweite Teil aus der Vielzahl von ersten Teilen und der Vielzahl von zweiten Teilen, Schätzen (CST) einer Materialmenge, die abgeschliffen werden muss, um die Montage des ersten Teils mit dem zweiten Teil zu ermöglichen, und Schätzen eines Abstands zwischen der relativen Position des ersten und des zweiten montierten Teils und einer nominellen relativen Position, wobei die Summe der geschätzten Menge und des geschätzten Abstands einen Indikator für die Fehlerhaftigkeit der Montage des ersten Teils mit dem zweiten Teil bilden;
    - für eine Charge von N herzustellenden Montagen, Zuweisen (AFF) von N ersten Teilen aus der Vielzahl von ersten Teilen zu N zweiten Teilen aus der Vielzahl von zweiten Teilen, um N Paare ({Ai, Bj}) eines ersten Teils und eines zweiten Teils zu bilden, wobei das Zuweisen derart durchgeführt wird, dass die N Paare eine Gesamtfehlerhaftigkeit minimieren, die der Summe der Indikatoren für die Fehlerhaftigkeit der Montage jedes der N Paare entspricht;
    - und dadurch, dass es das Herstellen der Montage und des Schleifens der N Paare beinhaltet, die die Gesamtfehlerhaftigkeit minimieren.

2. Verfahren nach Anspruch 1, wobei die ersten Teile Turbinenschaufeln sind und die zweiten Teile Vorderkantenverstärkungen sind.

3. Verfahren nach einem der Ansprüche 1 und 2, das einen Schritt umfasst, der durch den Rechnerzum Reduzieren (CRT) des Indikators für die Fehlerhaftigkeit der Montage eines ersten Teils mit einem zweiten Teil implementiert wird, wenn das erste Teil seit einer Dauer, die größer als ein erster Schwellenwert ist, für eine Montage bereitgestellt wird.

4. Verfahren nach einem der Ansprüche 1 bis 3, das einen Schritt umfasst, der von dem Rechner zum Reduzieren (CRT) des Indikators für die Fehlerhaftigkeit der Montage eines ersten Teils mit einem zweiten Teil implementiert wird, wenn das zweite Teil seit einer Dauer, die größer als ein zweiter Schwellenwert ist, für eine Montage bereitgestellt wird.

5. Verfahren nach Anspruch 1, das einen Schritt umfasst, der von dem Rechner zum Reduzieren (CRT) des Indikators für die Fehlerhaftigkeit der Montage eines ersten Teils und eines zweitens Teil implementiert wird, die für eine Montage bereitgestellt werden, wenn kein zweites Teil, das für eine Montage mit dem ersten Teil während der Bereitstellung des ersten Teils für eine Montage verfügbar wird, mit dem ersten Teil montiert werden kann.

6. Verfahren nach einem der Ansprüche 1, 3 oder 5, das ferner einen Schritt umfasst, der von dem Rechner zum Reduzieren (CRT) des Indikators für die Fehlerhaftigkeit der Montage eines ersten Teils und eines zweiten Teils implementiert wird, die für eine Montage bereitgestellt werden, wobei das Reduzieren mit einem Faktor gewichtet wird, der eine Wahrscheinlichkeit darstellt, dass kein erstes Teil, das für eine Montage während der Bereitstellung des zweiten Teils für eine Montage verfügbar wird, mit dem zweiten Teil montiert werden kann.

7. Verfahren nach einem der Ansprüche 1 bis 6, das einen Schritt umfasst, der von dem Rechner zum Bilden (SUB) einer Untergruppe der Vielzahl von ersten Teilen implementiert wird, die aus den ersten Teilen besteht, die am längsten für eine Montage bereitgestellt wurden, und wobei die N ersten Teile, die den N zweiten Teilen zugewiesen sind, zu der Untergruppe der Vielzahl von ersten Teilen gehören.

8. Verfahren nach Anspruch 7, das einen Schritt umfasst, der von dem Rechner zum Bilden (SUB) einer Untergruppe der Vielzahl von zweiten Teilen implementiert wird, die aus den zweiten Teilen besteht, die am längsten für eine Montage bereitgestellt wurden, und wobei die N zweiten Teile, die den N ersten Teilen zugewiesen sind, zu der Untergruppe der Vielzahl von zweiten Teilen gehören.

9. Verfahren nach Anspruch 8, wobei das Bilden (SUB) einer Untergruppe der Vielzahl von zweiten Teilen derart durchgeführt wird, dass die zweiten Teile der Untergruppe der Vielzahl von zweiten Teilen ermöglichen, dass mit den ersten Teilen der Untergruppe der ersten Teile M Montagen ohne Bearbeitung hergestellt werden, wobei M der Anzahl der Montagen ohne Bearbeitung entspricht, die mit den zweiten Teilen der Vielzahl von zweiten Teilen und den ersten Teilen der Untergruppe der Vielzahl von ersten Teilen hergestellt werden können.

10. Verfahren nach einem der Ansprüche 1 bis 9, wobei der Indikator für die Fehlerhaftigkeit der Montage eines ersten Teils mit einem zweiten Teil anhand von geometrischen Eigenschaften des ersten und des zweiten Teils geschätzt wird.

11. Verfahren nach Anspruch 10, wobei das Schätzen des Indikators für die Fehlerhaftigkeit der Montage des ersten Teils mit einem zweiten Teil einen Versuch umfasst, Punktwolken auszurichten, die die Oberflächen des ersten und des zweiten Teils darstellen.

12. Montagesystem für Teile, die aus einer Vielzahl von ersten Teilen und einer Vielzahl von zweiten Teilen ausgewählt werden, das einen Rechner umfasst, der für Folgendes konfiguriert ist:

   - Schätzen einer Materialmenge, die abgeschliffen werden muss, um die Montage des ersten Teils mit dem zweiten Teil zu ermöglichen, und eines Abstands zwischen der relativen Position des ersten und des zweiten montierten Teils und einer nominellen relativen Position für jedes erste Teil und jedes zweite Teil aus der Vielzahl von ersten Teilen und der Vielzahl von zweiten Teilen, wobei die Summe der geschätzten Menge und des geschätzten Abstands einen Indikator für die Fehlerhaftigkeit der Montage des ersten Teils mit dem zweiten Teil bilden; und
   - wenn eine Charge von N Montagen herzustellen ist, Zuweisen von N ersten Teilen aus der Vielzahl von ersten Teilen zu N zweiten Teilen aus der Vielzahl von zweiten Teilen, indem N Paare eines ersten Teils und eines zweiten Teils gebildet werden, wobei das Zuweisen derart durchgeführt wird, dass die N Paare eine Gesamtfehlerhaftigkeit minimieren, die der Summe der Indikatoren für die Fehlerhaftigkeit der Montage jedes der N Paare entspricht,
   - und dadurch, dass es Mittel zum Herstellen der Montage und des Schleifens der N Paare beinhaltet, die die Gesamtfehlerhaftigkeit minimieren.

13. Computerprogrammprodukt, das Programmcodeanweisungen umfasst, die die Schritte des Schätzens und Zuweisens des Verfahrens nach einem der Ansprüche 1 bis 11 ausführen, wenn das Programm auf einem Computer ausgeführt wird.

**Claims**

1. Method for assembling parts selected from a plurality of first parts and a plurality of second parts, comprising the following steps performed by a computer:

   - for each first part and each second part from the plurality of first parts and the plurality of second parts, estimating (CST) a quantity of material to be sanded so that the first part and the second part can be assembled, and estimating a discrepancy between the relative position of the assembled first and second parts and a nominal relative position, the sum of the estimated quantity and the estimated discrepancy being an indicator of the defectiveness of the assembly of the first part with the second part;
   - for a batch of N assemblies to be produced, assigning (AFF) N first parts from the plurality of first parts to N second parts from the plurality of second parts to form N pairs ({Ai, Bj}) from a first part and a second part, said assignment being made in such a way that said N pairs minimise an overall defectiveness corresponding to the sum of the indicators of defectiveness of the assembly of each of the N pairs;
   - and in that it includes the formation of the assembly and the sanding of the N pairs which minimise the overall defectiveness.

2. Method according to claim 1, wherein the first parts are blades and the second parts are leading-edge reinforcements.

3. Method according to one of claims 1 and 2, comprising a step performed by the computer of reducing (CRT) the indicator of defectiveness of the assembly of a first part with a second part when the first part has been made available for assembly for a period longer than a first threshold.

4. Method according to one of claims 1 to 3, comprising a step performed by the computer of reducing (CRT) the indicator of defectiveness of the assembly of a first part with a second part when the second part has been made available for assembly for a period longer than a second threshold.

5. Method according to claim 1, comprising a step performed by the computer of reducing (CRT) the indicator of defectiveness of the assembly of a first part and a second part made available for assembly when no second part, which will become available for assembly to the first part during the provision of the first part for assembly, can be assembled with the first part.

6. Method according to one of claims 1, 3 or 5, further comprising a step performed by the computer of reducing the indicator of defectiveness of the assembly of a first part and a second part made available for assembly, said reduction being weighted by a factor representative of a probability that no first part, which will become available for assembly during the provision of the second part for assembly, can be assembled with the second part.

7. Method according to one of claims 1 to 6, comprising a step implemented by the computer for forming (SUB) a subassembly of said plurality of first parts consisting of the oldest first parts made available for assembly and wherein the N first parts assigned to the N second parts belong to the said subassembly of said plurality of first parts.

8. Method according to claim 7, comprising a step implemented by the computer of forming (SUB) a subset of said plurality of second parts consisting of the oldest second parts made available for assembly, and wherein the N second parts assigned to the N first parts belong to said subset of said plurality of second parts.

9. Method according to claim 8, wherein the formation (SUB) of a subassembly of said plurality of second parts is carried out such that the second parts of said subassembly of said plurality of second parts make it possible, with the first parts of said subassembly of first parts, to produce M assemblies without machining, where M corresponds to the number of assemblies without machining that can be produced with the second parts of said plurality of second parts and the first parts of said subassembly of said plurality of first parts.

10. Method according to one of claims 1 to 9, wherein the indicator of defectiveness of the assembly of a first part with a second part is estimated from geometric characteristics of the first and second part.

11. Method according to claim 10, wherein estimating the indicator of defectiveness of the assembly of the first part with the second part comprises attempting to align point clouds representing the surfaces of the first and the second part.

12. System for assembling parts selected from a plurality of first parts and a plurality of second parts, comprising a computer configured:

   - to estimate for each first part and each second part from the plurality of first parts and the plurality of second parts, a quantity of material to be sanded so that the first part and the second part can be assembled, and a discrepancy between the relative position of the assembled first and second parts and a nominal relative position, the sum of the estimated quantity and the estimated discrepancy being an indicator of the defectiveness of the assembly of the first part with the second part; and
   - to assign, when a batch of N assemblies is to be produced, N first parts from the plurality of first parts to N second parts from the plurality of second parts by forming N pairs from a first part and a second part, said assignment being made in such a way that said N pairs minimise an overall defectiveness corresponding the sum of the indicators of defectiveness of the assembly of each of the N pairs,
   - and in that it includes means for forming the assembly and sanding the N pairs which minimise the overall defectiveness.

13. Computer program product comprising program code instructions for performing the estimation and assignment steps of the method according to any one of claims 1 to 11 when said program is executed on a computer.

FIG. 1

**EP 3 555 776 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATTHIAS H.Y. TAN et al.** Generalized sélective assembly. *IIE TRANSACTIONS,* 24 Mai 2011, vol. 44 (1), 27-42

- **SIMON FLÖRY.** *Constrained Matching of Point Clouds and Surfaces,* 2009